# EUROPEAN PATENT APPLICATION

(11) **EP 1 759 755 A1**
(43) Date of publication of application: **07.03.2007**
(21) Application number: 05737118.9
(22) Date of filing: 26.04.2005
(51) Int. Cl.: B01D 53/14, F24F 7/00, H01L 21/027, F24F 7/06

(54) **GAS PURIFYING DEVICE**

(30) Priority: 28.04.2004 JP 2004133663
(71) Applicant: DAIKIN INDUSTRIES, LTD., Osaka-shi, Osaka 530-8323 (JP)
(72) Inventor: OHNO, M., DAIKIN INDUSTRIES, LTD., Sakai-shi, Osaka 5918511 (JP); SAHARA, Y., DAIKIN INDUSTRIES, LTD., Sakai-shi, Osaka 5918511 (JP); TETSUYA, K., DAIKIN INDUSTRIES, LTD., Sakai-shi, Osaka 5918511 (JP); MATSUMOTO, T., DAIKIN INDUSTRIES, LTD., Sakai-shi, Osaka 5918511 (JP)
(74) Representative: Goddar, Heinz J.
(86) International application number: PCT/JP2005/007908
(87) International publication number: WO 2005/105269

(57) **Abstract**

Reflow means (L₃) is provided in a gas purifying device, and the means causes liquid discharged from an element positioned on the downstream side of an airflow to reflow to a liquid circulation system path of an element positioned on the upstream side of the air flow. The liquid dissolves and removes low-concentration containment by gas-liquid contact, and this causes the liquid to lose the capability of dissolving and removing contaminant. The liquid is discharged from the element on the downstream side and is made to reflow to the element on the upstream side through reflow means, and contaminant is dissolved and removed by gas-liquid contact between the liquid and non-purified air containing high-concentration contaminant.

## Description

### TECHNICAL FIELD

The present invention relates to a gas purifying device, and more particularly, to a gas purifying device for producing purified air for supply to a clean room.

### BACKGROUND ART

Liquid treatment or heat treatment is performed on a substrate, such as an LCD substrate or a semiconductor substrate, by re-circulating purified air from a gas purifying device in a clean room.

A gas purifying device typically includes a chemical filter. As time elapses, contaminants (e.g., ammonia components) are adsorbed in the chemical filter. This lowers the filtering capability of the filter. Thus, the filter must be replaced. This increases operating costs. Further, the replacement of chemical filters results in the necessity to stop the entire system. This lowers productivity.

Japanese Laid-Open Patent Publication No. 2001-230196 describes a gas purifying device that separates and eliminates contaminants from a gas with a liquid (e.g., pure water) by having the gas come into contact with the liquid through a plurality of porous films arranged in an impurity elimination element.

### DISCLOSURE OF THE INVENTION

### PROBLEMS THAT ARE TO BE SOLVED BY THE INVENTION

To prevent deterioration, the liquid used in the above gas purifying device repetitively undergoes a purifying process, in which the liquid is collected in the impurity elimination element, and a non-purifying process, in which the liquid is discharged from the element. Alternatively, the liquid circulates through the element so that an ion exchange resin eliminates the contaminants dissolved in the liquid. In either case, the operation of the purifying device must temporarily be stopped. This lowers productivity.

When the impurity elimination element repetitively collects and discharges liquid, the liquid must be present in the vicinity of the porous films and not just be in the element. Otherwise, contaminants will not be effectively eliminated and the productivity will be adversely affected.

The elements may be used in large numbers to improve the contaminant filtering efficiency or to increase the airflow amount. However, liquid circulates independently through each element. This would result in unnecessary disposal of liquid that has a low dissolved contaminant concentration even though the liquid may still be used. This is problematic in economic terms.

It is an object of the present invention to provide a gas purifying device that is superior in economic terms and has high productivity.

### MEANS FOR SOLVING THE PROBLEMS

To achieve the above object, the present invention provides a plurality of impurity elimination elements for separating and eliminating contaminants from non-purified air with liquid by performing gas-liquid contact through a porous film. The elements are arranged in multiple stages from an upstream side to a downstream side of an air flow. Each element is provided with a liquid supply system passage, which is for supplying fresh liquid, a liquid circulation system passage, and a re-circulating means for re-circulating liquid discharged from an element that is located at a downstream side of the air flow to an element that is located at an upstream side of the air flow.

In the above embodiment, with the elements arranged in multiple stages, the contaminants in non-purified air come into contact with liquid through porous films and are sequentially separated and eliminated by the liquid. As contact with non-purified air including a low concentration of contaminants occurs to dissolve and eliminate the contaminants and results in a state in which a lower side element cannot exert the capability of dissolving low concentration contaminants, the liquid discharged from the lower side element is re-circulated to an upstream side element by a re-circulating means. The liquid re-circulated to the upstream element dissolves contaminants by performing gas-liquid contact with the non-purified air including a high concentration of contaminants. Accordingly, liquid that would have been disposed as drainage liquid in the prior art is effectively used. This decreases the replenishing amount of the pure water in an upstream element that comes into gas-liquid contact with the non-purified air including a high concentration of contaminants. Further, continuous operation of the gas purifying device is possible and a high substrate productivity is ensured. Further, the arrangement of the elements in multiple stages improves the filtering rate of the contaminants in the air and increases the air flow amount.

In another aspect of the present invention, liquid discharged from an element that is located at the most upstream side of the air flow passes through a reverse osmosis film module and is separated into a liquid in which dissolved contaminants are concentrated and a liquid from which contaminants are eliminated. The liquid in which dissolved contaminants are concentrated is discharged out of the system passages and the liquid from which contaminants are eliminated may be re-circulated to the liquid circulation system passage of any one of the elements. In this case, liquid including a high concentration of dissolved contaminants discharged from the element located in the most upstream position of the air flow may be re-used for eliminating contaminants by passing through the reverse osmosis film module.

In a further aspect of the present invention, a UV lamp for performing irradiation with ultraviolet rays is arranged at an appropriate location in the liquid circulation system passage in each of the elements. In this structure, the ultraviolet rays irradiated from a UV lamp prevent the generation of bacteria in the water and decomposes gas components (e.g., ammonia) in the water. Accordingly, the ultraviolet rays irradiated from the UV lamp significantly contribute to the re-generation of the liquid.

### BRIEF DESCRIPTION OF THE DRAWINGS

Fig. 1 is a schematic diagram showing the structure of a gas purifying device according to the present invention;
Fig. 2 is a partially cutaway cross-sectional view of an element in the gas purifying device of the present invention; and
Fig. 3 is a circuit diagram showing a pure water piping system in the gas purifying device of the present invention.

### BEST MODE FOR CARRYING OUT THE INVENTION

A preferred embodiment of the present invention will now be described with reference to the accompanying drawings.

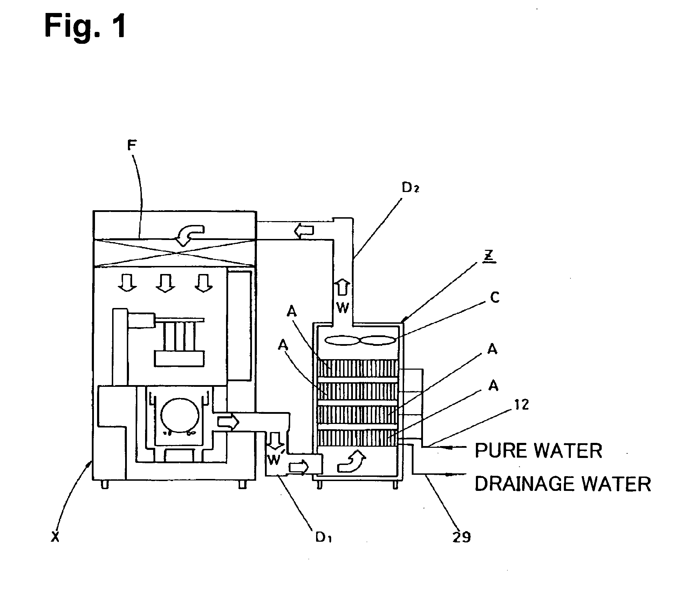

As shown in Fig. 1, a gas purifying device Z is added to a semiconductor wafer cleaning apparatus X. Non-purified air W' is emitted into the purifying device Z from the cleaning apparatus X through a duct D₁. The non-purified gas W', which is purified by the purifying device Z, is returned to the cleaning apparatus X through a duct D₂ as regenerated air W and then sent to a main operation portion of the cleaning apparatus X by a fan filter F.

The gas purifying device Z includes four stages of impurity elimination elements. Each element allows the passage of gases and includes porous films arranged perpendicular to the direction in which air circulates. The porous films prevent the passage of gases. Reference character C denotes a fan for sending the purified air W to the cleaning apparatus C.

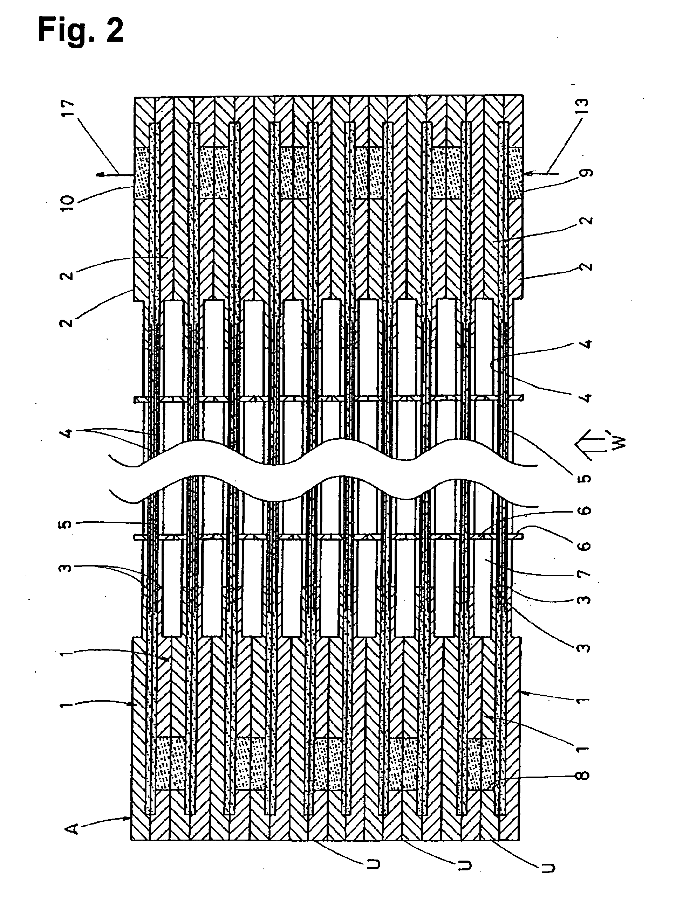

As shown in Fig. 2, each element is formed by stacking film elements 1 of porous films (e.g., PTEF porous films) and causes gas-liquid contact between pure water and the non-purified air W' through the film elements 1. Each film element 1 includes a support frame 2 and a porous film 4. The support frame 2 is formed integrally from a resin material and has a thin and elongated rectangular shape. The porous film 4 is planar and extends across an opening 3 formed in the middle portion of the support frame 2. A pair of the film elements 1 and 1 forms a film unit U. A pure water passage 5 is formed between the film elements 1 and 1 in each film unit U. An air passage extends in a direction perpendicular to the porous films 4 for circulation of the non-purified air W'. A spacer 6 maintains the distance between the film units U and U at portions where the porous films 4 are arranged. Reference numeral 8 denotes a circulation port for the pure water, reference numeral 9 denotes a pure water inlet, and reference numeral 10 denotes a pure water outlet.

The pure water drawn into the lower inlet 9 of the element flows upward from the bottom through the pure water passage 5 in a zigzagged manner to be discharged from the upper outlet 10. In this process, the pure water comes into contact with the non-purified air W' flowing through the air passage and separates and eliminates contaminants from the non-purified air W'. Since the pure water passage 5 is long, as the pure water advances, turbulence occurs in the pure water. This decreases the amount of the water flowing through the central portion of the passage 5 and increases the amount of the water flowing at the vicinity of the porous films 4. Thus, the area of the porous films 4 that comes into contact with the pure water increases if the circulated amount of water per unit flow amount were to be the same. This improves the effect of dissolving the contaminants into the pure water from the non-purified air W' and increases the contaminant filtering efficiency.

The element is not limited to the planar type element and may be any type of element.

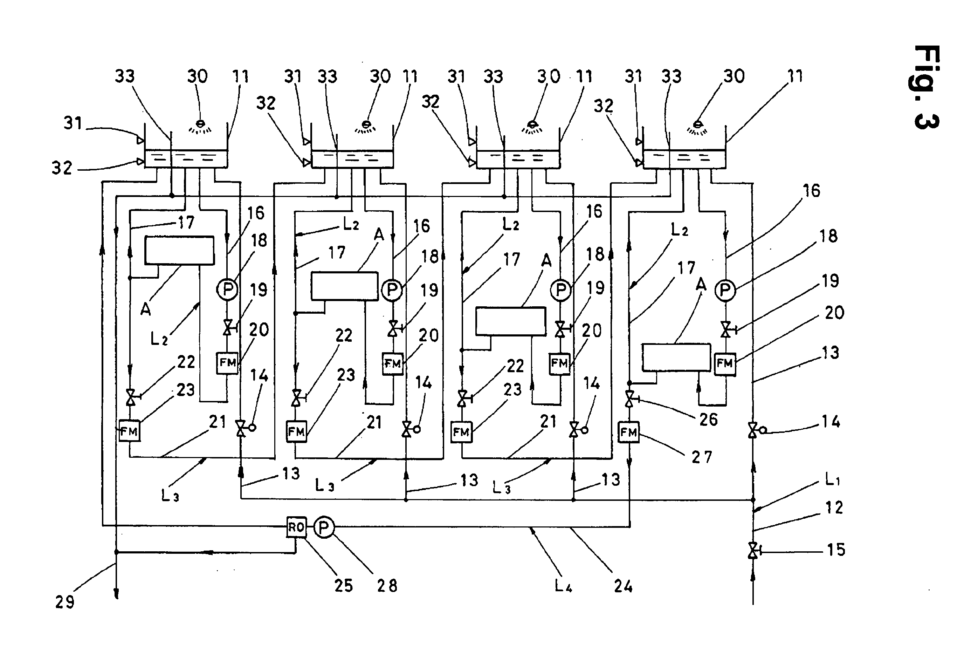

The flow of the pure water to the to the elements in the gas purifying device Z will now be described with reference to Fig. 3. Air flows upward from the bottom. In the drawing, the right side is the upstream side of the air flow, and the left side is the downstream side of the air flow.

Each element is provided with a water supply system passage L₁, which supplies fresh liquid, and a pure water circulation system passage L₂. The water supply system passage L₁, which is for supplying fresh pure water to a buffer tank 11 arranged for each element, includes a main pipe 12 and a branch pipe 13, which branches from the main pipe 12 and extends to the buffer tank 11. An electromagnetic valve 14, which is arranged in each branch pipe 13, is opened when water must be supplied. A manual valve 15, which is arranged in the main pipe 12, is manually opened when water must be supplied.

Each pure water circulation system passage L₂ circulates pure water between each element A and the corresponding buffer tank 11. The pure water circulation system passage L₂, which connects the buffer tank 11 to the inlet 9 of the corresponding element, includes an inlet pipe 16 and an outlet pipe 17. The inlet pipe 16 includes a pump 18, a manual valve 19, and a flow meter 20. The outlet pipe 17 connects the element outlet 10 and the buffer tank 11.

In the preferred embodiment, a re-circulating means L₃ circulates the water discharged from an element A located downstream to the air flow to an element A located upstream to the air flow. The re-circulating means L₃ includes a re-circulation pipes 21, which branch from the outlet pipes 17 of the three elements A excluding the most upstream element A, and extends to the buffer tanks 11 located at the upstream side. Each re-circulation pipe 21 includes a manual valve 22, which is opened when circulation is necessary, and a flow meter 23.

The water discharged from the element A that is located at the most upstream position passes through a reverse osmosis film module 25 to separate the water into contaminants, which are concentrated dissolved contaminants, and pure water, from which the contaminants have been eliminated. A pure water regenerating means L₄ is connected to the circulation system passage L₂ of the most downstream element A to discharge contaminated water out of the system passage and re-circulate pure water to the most downstream element A. The pure water regenerating means L₄ includes a re-circulation pipe 24, which branches from the outlet pipe 17 of the most upstream element A and connects to the most downstream buffer tank 11. The re-circulation pipe 24 includes a manual valve 26, which is opened when re-circulation is necessary, a flow meter 27, a pump 28, and the reverse osmosis film module 25. The water, in which dissolved contaminants are concentrated, produced by the reverse osmosis film module 25 is discharged out of the passage through a drainage pipe 29. Instead of the most downstream buffer tank 11, the re-circulation pipe 24 may be connected to other buffer tanks 11.

Each buffer tank 11 includes a UV lamp 30, which irradiates ultraviolet rays. The UV lamp 30 irradiates the water with ultraviolet rays to prevent the generation of bacteria in the water and decompose gas components (e.g., ammonia) that exist in the water. The UV lamp 30 may be arranged at any appropriate location in the pure water circulation system passage L₂, which includes the buffer tank 11.

Each buffer tank 11 includes float switches 31 and 32 for detecting water levels (highest level and lowest level) in the buffer tank 11. The float switches 31 and 32 determine the timing for replenishing the pure water in the buffer tank 11. Further, each buffer tank 11 includes an overflow prevention pipe 33, which is connected to the drainage pipe 29.

With the elements A that are arranged in multiple stages, the contaminants in the non-purified air W' is sequentially separated and eliminated when coming into gas-liquid contact with the pure water through the porous film. This produces purified air W.

The capability of the water to dissolve contaminants (e.g., ammonia gas) is determined by the relationship between the gas concentration and the concentration of gases dissolved in the water, which is referred to as the Henry's law. That is, the water discharged from a downstream side element does not have the capability of dissolving low concentration gases but still has the capability of dissolving high concentration gases.

In this embodiment, gas-liquid contact with low concentration contaminants is performed to dissolve and eliminate contaminants. The water discharged from downstream elements that cannot exert the capability of dissolving and eliminating contaminants is re-circulated to the upstream elements through the re-circulating means L₃ to come into contact with the non-purified air W' that includes a high concentration of contaminants. This dissolves and eliminates the contaminants. Accordingly, water that would have been disposed as drainage liquid in the prior art is effectively used. This decreases the replenishing amount of the pure water in an upstream element that comes into gas-liquid contact with the non-purified air W' including a high concentration of contaminants. Further, the need for stopping the operation of the cleaning apparatus to replenish the pure water is eliminated and continuous operation of the cleaning apparatus becomes possible. The amount of the pure water that requires replenishment corresponds to the amount of the pure water discharged from the system due to deterioration and the amount of the pure water consumed to humidify air in the elements A.

The arrangement of the elements A in multiple stages improves the contaminant elimination rate and increases the air flow amount.

Water that includes a high concentration of dissolved contaminants and is discharged from the most upstream element with respect to the air flow may be re-used as the pure water for eliminating contaminants through a simple means in which it passes through the reverse osmosis film module 25. This further decreases the replenishing amount of the pure water in an upstream element that comes into gas-liquid contact with the non-purified air W' including a high concentration of contaminants.

The ultraviolet rays irradiated by the UV lamps 30 prevent the generation of bacteria and decompose ammonia in the water flowing through each liquid circulation system passage L₂. This significantly contributes to the regeneration of pure water.

In this embodiment, the reverse osmosis film module and the UV lamps are both used. However, the reverse osmosis film module and the UV lamps are not necessarily required and either one may be eliminated.

In this embodiment, pure water is used as the liquid that performs gas-liquid contact in the elements. However, liquids other than pure water may be used.

In the above embodiment, the apparatus X to which the gas purifying device Z is added is a cleaning apparatus. However, the apparatus X does not have to be a cleaning apparatus and may be a substrate processing apparatus, such as a photoresist application development apparatus, or a mini-environment (EFEM).

## Claims

1. A gas purifying device being **characterized by**:
a plurality of impurity elimination elements (A) for separating and eliminating contaminants from non-purified air (W') with liquid by performing gas-liquid contact through a porous film, the elements being arranged in multiple stages from an upstream side to a downstream side of an air flow, wherein each element is provided with a liquid supply system passage (L₁), which is for supplying fresh liquid, a liquid circulation system passage (L₂), and a re-circulating means (L₃) for re-circulating liquid discharged from an element (A) that is located at a downstream side of the air flow to an element (A) that is located at an upstream side of the air flow.

2. The gas purifying device according to claim 1, being **characterized in that**:
liquid discharged from an element (A) that is located at the most upstream side of the air flow passes through a reverse osmosis film module (25) and is separated into a liquid in which dissolved contaminants are concentrated and a liquid from which contaminants are eliminated, wherein the liquid in which dissolved contaminants are concentrated is discharged out of the system passages and the liquid from which contaminants are eliminated are re-circulated to the liquid circulation system passage (L₂) of any one of the elements (A).

3. The gas purifying device according to claim 1 or 2, being **characterized by**:
a UV lamp (30) for performing irradiation with ultraviolet rays is arranged at an appropriate location in the liquid circulation system passage (L₂) in each of the elements (A).
